# EUROPEAN PATENT APPLICATION

(11) **EP 1 564 671 A1**
(43) Date of publication of application: **17.08.2005**
(21) Application number: 05250488.3
(22) Date of filing: 31.01.2005
(51) Int. Cl.: G06F 17/60

(54) **Process editing apparatus and method and process management apparatus and method**

(30) Priority: 12.02.2004 JP 2004034998; 17.01.2005 JP 2005009265
(71) Applicant: Ricoh Company, Ltd., Tokyo 143-8555 (JP)
(72) Inventor: Matsui, Yoshiro, Minamisaitama-gun Saitama (JP)
(74) Representative: Leeming, John Gerard

(57) **Abstract**

A process editing apparatus is disclosed that includes an editing part that edits a process in execution.

## Description

The present invention relates to a process editing apparatus and method, a process management apparatus and method, and recording media storing programs for causing a computer to execute such methods.

In these years, a workflow system has become well known that manages and automates a flow of documents or information from one person to another, when multiple persons work via a network, so as to facilitate their work. Such a workflow system is disclosed, for instance, in Haruo Hayami; "Expanding Workflow Management System: 1," IPSJ (Information Processing Society of Japan) Magazine, Vol. 39, No. 11, pp. 1160-1165 (1998), Haruo Hayami, Toshiaki Sakaguchi, and Ryoichi Shibuya; "Expanding Workflow Management System: 2," IPSJ Magazine, Vol. 39, No. 12, pp. 1258-1263 (1998), and Haruo Hayami, Ryoichi Shibuya, Takao Suzuki, Junichi Ikoma, Yosuke Terashita, Naoki Ueno, Satoshi Kaneko, and Kiyoshi Hayashi; "Expanding Workflow Management System: 3," IPSJ Magazine, Vol. 40, No. 5, pp. 507-513 (1999).

However, the conventional workflow system has a problem in that it is impossible to edit a process that is being executed.

Accordingly, it is a general object of the present invention to provide a process editing apparatus and method and a process management apparatus and method in which the above-described disadvantage is eliminated.

A more specific object of the present invention is to provide a process editing apparatus and method and a process management apparatus and method that make it possible to edit a process in execution, and recording media storing programs for causing a computer to execute such methods.

The above objects of the present invention are achieved by a process editing apparatus including an editing part configured to edit a process in execution.

The above objects of the present invention are also achieved by a process management apparatus including a process execution control part configured to control process execution, wherein the process execution control part updates a process in execution in response to a request.

The above objects of the present invention are also achieved by a computer-readable recording medium storing a program for causing a computer to perform a process editing method, the process editing method including the step of editing a process in execution.

The above objects of the present invention are also achieved by a computer-readable recording medium storing a program for causing a computer to perform a process management method, the process management method including the step of updating a process in execution in response to a request.

The above objects of the present invention are also achieved by a process editing method including the step of editing a process in execution.

The above objects of the present invention are also achieved by a process management method including the step of updating a process in execution in response to a request.

According to the present invention, it is possible to edit a process in execution.

Other objects, features and advantages of the present invention will become more apparent from the following detailed description when read in conjunction with the accompanying drawings, in which:
FIG. 1 is a block diagram illustrating a hardware configuration of a server according to a first embodiment of the present invention;
FIG. 2 is a block diagram illustrating a hardware configuration of a client according to the first embodiment of the present invention;
FIG. 3 is a schematic diagram for illustrating the terms employed in this specification;
FIG. 4 is a schematic diagram illustrating a software configuration according to the first embodiment of the present invention;
FIG. 5 is a sequence diagram for illustrating suspension of an activity according to a first embodiment of the present invention;
FIG. 6 is a sequence diagram for illustrating advance execution of an activity according to the first embodiment of the present invention;
FIG. 7 is a sequence diagram for illustrating addition of an activity according to the first embodiment of the present invention;
FIG. 8 is a diagram for illustrating more specific examples of the addition of an activity according to the first embodiment of the present invention;
FIG. 9 is a diagram for illustrating an activity state transition model according to the first embodiment of the present invention;
FIG. 10 is a diagram for illustrating a transition condition transition model according to the first embodiment of the present invention;
FIG. 11 is a diagram illustrating a state transition of activities and transitions according to the first embodiment of the present invention;
FIG. 12 illustrates tables included in a process instance database according to the first embodiment of the present invention;
FIG. 13 is a sequence diagram for illustrating reuse of a process instance flow according to the first embodiment of the present invention;
FIG. 14 is a diagram illustrating a process according to the first embodiment of the present invention;
FIG. 15 is a diagram for illustrating an example of the suspension of an activity according to the first embodiment of the present invention;
FIG. 16 is a diagram illustrating a state transition of activities and transitions in the case of suspending an activity according to the first embodiment of the present invention;
FIG. 17 is a diagram for illustrating an example of the advance execution of an activity according to the first embodiment of the present invention;
FIG. 18 is a diagram for illustrating an example of the addition of an activity according to the first embodiment of the present invention;
FIG. 19 is a diagram illustrating a GUI in a process execution editing tool according to the first embodiment of the present invention;
FIG. 20 is a diagram illustrating a GUI in a process definition tool according to the first embodiment of the present invention;
FIG. 21 is a diagram illustrating a state transition of activities and transitions in the case of advance execution of an activity according to a second embodiment of the present invention;
FIG. 22 is a diagram illustrating a VIEW screen in the case of displaying multiple tasks as different flows according to the second embodiment of the present invention;
FIG. 23 is a diagram illustrating a VIEW screen according to the second embodiment of the present invention, in which multiple flows are displayed, being applied to a fixed flow;
FIG. 24 is a schematic diagram illustrating a software configuration according to a third embodiment of the present invention;
FIG. 25 is a table illustrating examples of authority to operate a process object according to the third embodiment of the present invention;
FIG. 26 illustrates a table of a process object ACL database according to the third embodiment of the present invention;
FIG. 27 is a sequence diagram for illustrating suspension of an activity including a check on operational authority according to the third embodiment-of the present invention;
FIG. 28 is a sequence diagram for illustrating advance execution of an activity including a check on operational authority according to the third embodiment of the present invention; and
FIG. 29 is a sequence diagram for illustrating addition of an activity including a check on operational authority according to the third embodiment of the present invention.

### DETAILED DESCRIPTION OF THE PREFERRED EMBODIMENTS

A description is given below, with reference to the accompanying drawings, of embodiments of the present invention.

### [First Embodiment]

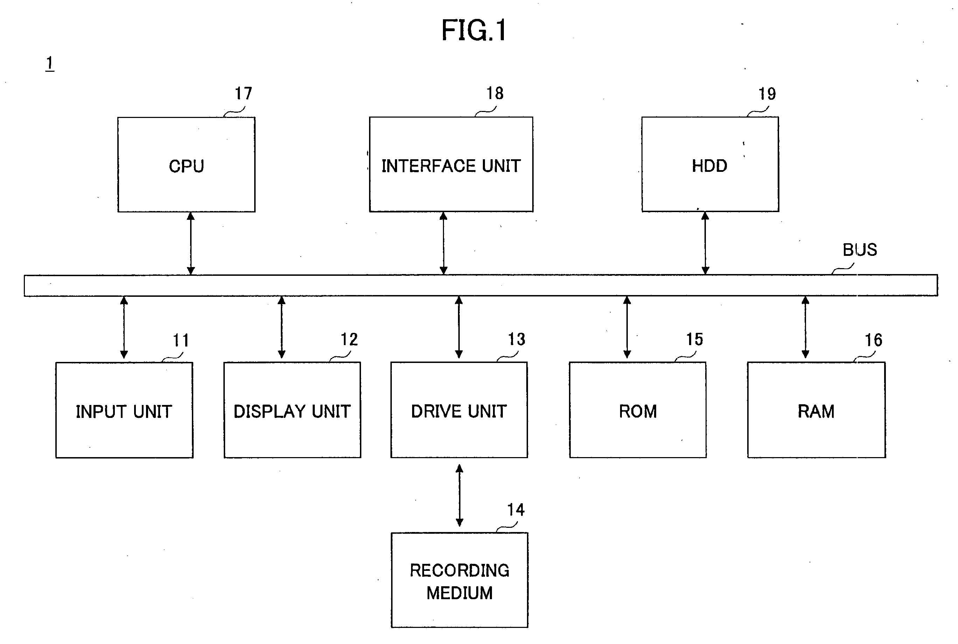

First, a description is given, with reference to FIG. 1, of a hardware configuration of a server 1 according to a first embodiment of the present invention. FIG. 1 is a block diagram illustrating a hardware configuration of the server 1.

The hardware configuration of the server 1 illustrated in FIG. 1 includes an input unit 11, a display unit 12, a drive unit 13, a recording medium 14, a ROM (Read-Only Memory) 15, a RAM (Random Access Memory) 16, a CPU (Central Processing Unit) 17, an interface unit 18, and an HDD (Hard Disk Drive) 19, which are interconnected through a bus.

The input unit 11 includes a keyboard and a mouse operated by a user of the server 1. The input unit 11 is used to input various operational signals to the server 1. The display unit 12 includes a display used by the user of the server 1, and displays a variety of information items. The interface unit 18 connects the server 1 to a network or the like.

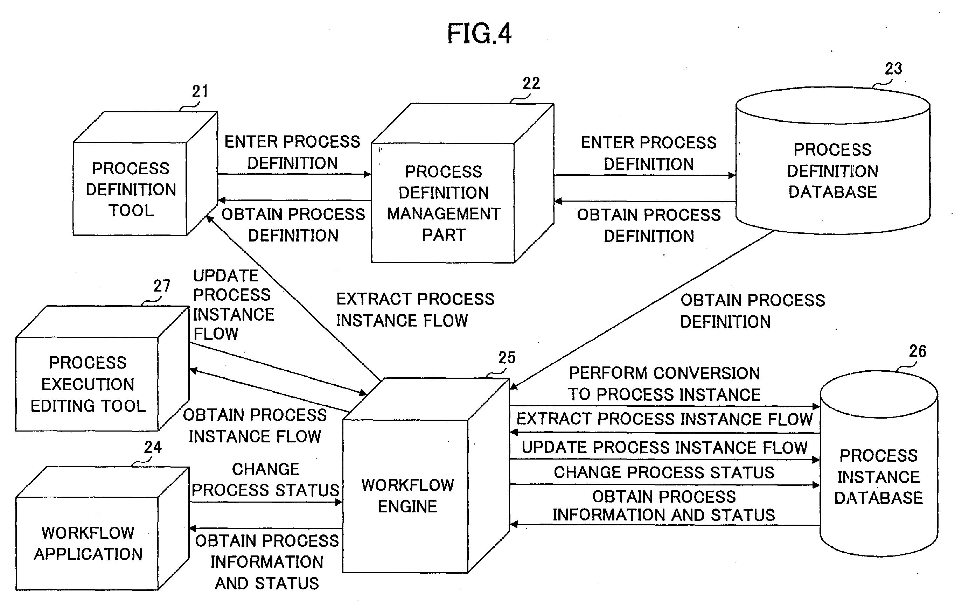

For instance, a below-described process definition management part 22, process definition database 23, workflow engine 25, and process instance database 26 (FIG. 4), which are programs corresponding to software, are provided to the server 1 by the recording medium 14 such as a CD-ROM, or are downloaded to the server 1 through the network. The recording medium 14 is set in the drive unit 13, so that the programs are installed in the HDD 19 through the drive unit 13 from the recording medium 14.

The ROM 15 stores data. The RAM 16 stores the program read out from the HDD 19 when the server 1 is started. The CPU 17 performs processing in accordance with the program stored in the RAM 16.

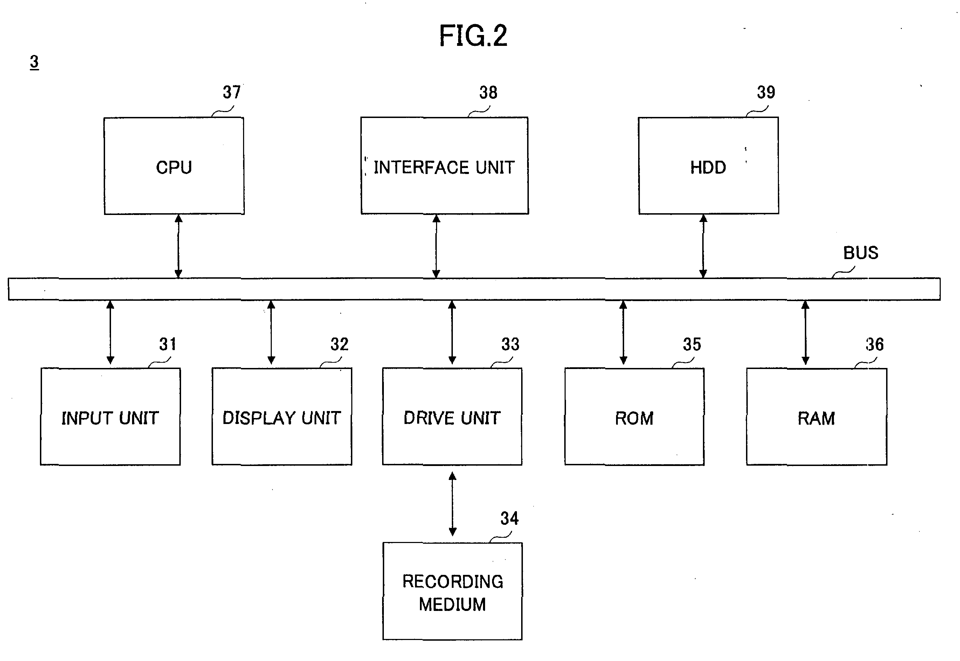

Next, a description is given, with reference to FIG. 2, of a hardware configuration of a client 3 according to the first embodiment of the present invention. FIG. 2 is a block diagram illustrating a hardware configuration of the client 3.

The hardware configuration of the client 3 illustrated in FIG. 2 includes an input unit 31, a display unit 32, a drive unit 33, a recording medium 34, a ROM 35, a RAM 36, a CPU 37, an interface unit 38, and an HDD 39, which are interconnected through a bus.

The input unit 31 includes a keyboard and a mouse operated by a user of the client 3. The input unit 31 is used to input various operational signals to the client 3. The display unit 32 includes a display used by the user of the client 3, and displays a variety of information items. The interface unit 38 connects the client 3 to the network.

For instance, a below-described process definition tool 21, process execution editing tool 27, and workflow application 24 (FIG. 4), which are programs corresponding to software, are provided to the client 3 by the recording medium 34 such as a CD-ROM, or are downloaded to the client 3 through the network. The recording medium 34 is set in the drive unit 33, so that the programs are installed in the HDD 39 through the drive unit 33 from the recording medium 34.

The ROM 35 stores data. The RAM 36 stores the program read out from the HDD 39 when the client 3 is started. The CPU 37 performs processing in accordance with the program stored in the RAM 36.

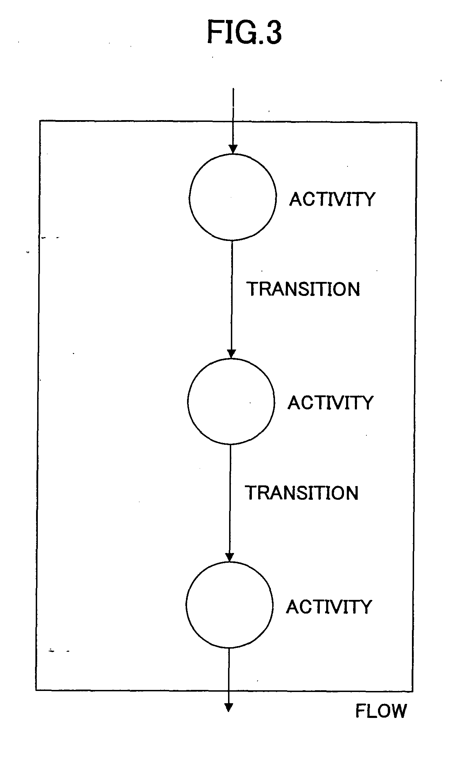

Next, a description is given, with reference to FIG. 3, of terms employed in this specification. FIG. 3 is a schematic diagram for illustrating the terms employed in this specification.

In this specification, a process refers to a processing flow for carrying out a task. An activity refers to each of the jobs forming the process. The activity has states such as ACTIVATED, COMPLETED, and WAITING. For instance, a below-described workflow system composed of software expresses the progress of the process by the transition of these states. A transition defines the order of execution of activities. The transition also has a condition (state), and the workflow system determines the state transition condition of an activity to connect based on the condition.

A flow is a flowchart of processing expressed by activities and transitions. A process definition is a process template, and defines the flow of a process before execution. A process instance flow is the flow of a process in execution (that is being executed).

A process instance is a substantiated process definition, and includes the actual contents of a task. The above-described process instance flow is the flow definition of a process instance. Normally, the process instance flow is equal to its base process definition.

However, as described below, the process instance flow and the process definition are treated as different entities and are separately operable in this workflow system. Accordingly, in this workflow system, a change in the process instance flow is prevented from being reflected in its base process definition, and a change in the process definition is also prevented from being reflected in a process that has already been converted into an instance.

Next, a description is given, with reference to FIG. 4, of a configuration of software installed in the server 1 and the client 3 according to the first embodiment of the present invention. FIG. 4 is a schematic diagram illustrating a software configuration according to the first embodiment of the present invention.

The software configuration illustrated in FIG. 4 includes the process definition tool 21, the process definition management part 22, the process definition database 23, the workflow application 24, the workflow engine 25, the process instance database 26, and the process execution editing tool 27.

The process definition tool 21 defines a process. The process definition tool 21 enters a process definition in and obtains a process definition from the process definition database 23 through the process definition management part 22. Further, the process definition tool 21 extracts a process instance flow from the process instance database 26 through the workflow engine 25. Then, the process definition tool 21, for instance, edits the extracted process instance flow, and enters the edited process instance flow in the process definition database 23 as a process definition through the process definition management part 22.

The process definition management part 22 manages process definitions stored in the process definition database 23. Based on a request from the process definition tool 21, the process definition management part 22 obtains a corresponding process definition from the process definition database 23 or enters a corresponding process definition in the process definition database 23.

The process definition database 23 stores process definitions.

The workflow application 24 executes activities. Through the workflow engine 25, the workflow application 24 obtains the process information and the process status of a corresponding process instance stored in the process instance database 26, and changes the process status. Further, the workflow application 24 obtains a process definition from the process definition database 23 through the workflow engine 25, and converts a process into an instance based on the obtained process definition. The workflow application 24 stores the process-converted instance in the process instance database 26.

The workflow engine 25 obtains a corresponding process definition from the process definition database 23 in response to a request from the workflow application 24, and converts a process into an instance based on the obtained process definition to store the process-converted instance in the process instance database 26. Further, based on a request from the workflow application 24, the workflow engine 25 obtains the process information and the process status of a corresponding process instance from the process instance database 26, and changes the process status of the corresponding process instance stored in the process instance database 26.

Further, the workflow engine 25 extracts a process instance flow from the process instance database 26 in response to a request from the process execution editing tool 27 or the process definition tool 21. The workflow engine 25 also updates a process instance flow stored in the process instance database 26 in response to a request from the process execution editing tool 27. The updating of the process instance flow includes suspension of an activity, advance execution of an activity, and addition of an activity, which are described below.

The process instance database 26 stores process instances.

The process execution editing tool 27 edits a process instance flow. The process execution editing tool 27 obtains a process instance flow from the process instance database 26 through the workflow engine 25, and edits the obtained process instance flow. The process execution editing tool 27 stores the edited process instance flow in the process instance database 26 through the workflow engine 25, thereby updating the process instance flow.

As described above, the process definition tool 21, the process execution editing tool 27, and the workflow application 24 are installed in the client 3, and the process definition management part 22, the process definition database 23, the workflow engine 25 and the process instance database 26 are installed in the server 1. Further, the process definition tool 21, the process execution editing tool 27, the workflow application 24, the process definition management part 22, the process definition database 23, the workflow engine 25 and the process instance database 26 may be installed as Web services. In this configuration, communications are performed between the client 3 and the server 1 in accordance with SOAP (Simple Object Access Protocol) based on XML (eXtensible Markup Language) or HTTP (HyperText Transfer Protocol).

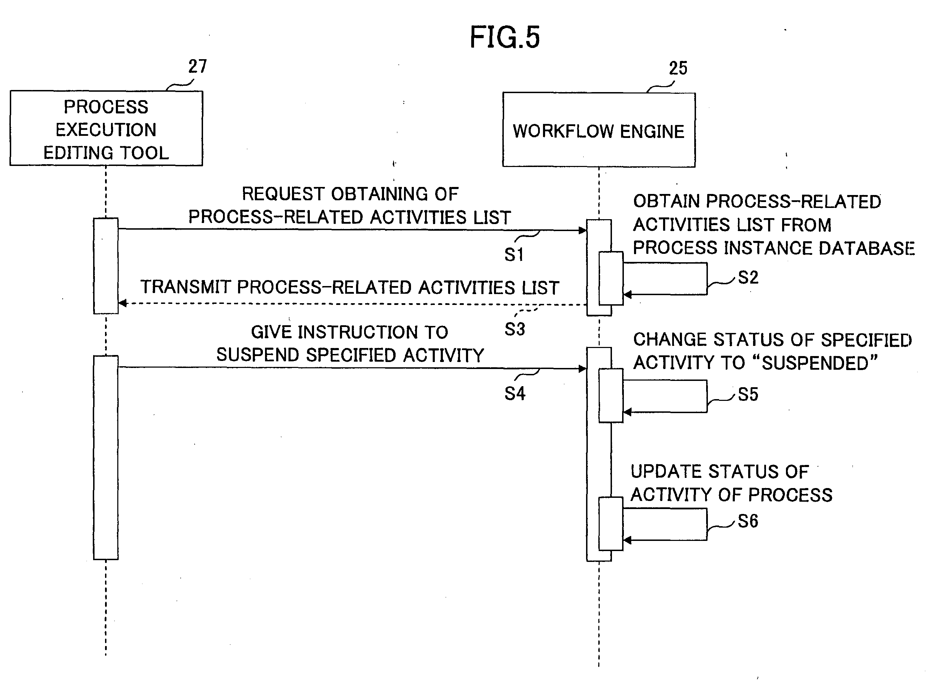

A description is given below, with reference to FIG. 5, of suspension of an activity as an example of the editing of a process instance flow in the process execution editing tool 27. FIG. 5 is a sequence diagram for illustrating suspension of an activity.

First, in step S1, the process execution editing tool 27 transmits a request to obtain a list of activities relating to a process to the workflow engine 25. In step S2, receiving the request from the process execution editing tool 27, the workflow engine 25 obtains the process-related activities list from the process instance database 26.

In step S3, the workflow engine 25 transmits a response reporting the obtaining of the process-related activities list to the process execution editing tool 27, the response including the process-related activities list.

In step S4, receiving the process-related activities list, the process execution editing tool 27 creates a screen including the process-related activities list and displays the screen to a user. Then, the process execution editing tool 27 transmits a request to give an instruction to suspend an activity specified by the user or the like to the workflow engine 25. The user refers to, for instance, a workflow participant. The same holds true for the following.

In step S5, receiving the request from the process execution editing tool 27, the workflow engine 25 changes the status (state) of the specified activity stored in the process instance database 26 to SUSPENDED.

In step S6, the workflow engine 25 performs a process driving operation to update the status of the corresponding activity of the process.

By performing processing as illustrated in FIG. 5, an activity relating to a process in execution can be suspended.

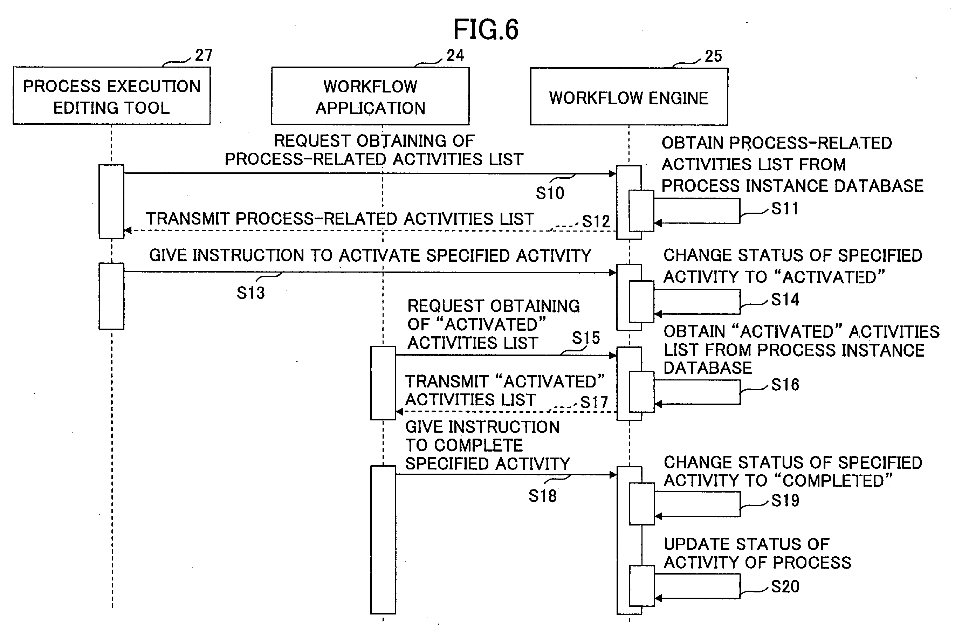

Next, a description is given, with reference to FIG. 6, of advance execution of an activity as another example of the editing of a process instance flow in the process execution editing tool 27. FIG. 6 is a sequence diagram for illustrating advance execution of an activity.

First, in step S10, the process execution editing tool 27 transmits a request to obtain a list of activities relating to a process to the,workflow engine 25. In step S11, receiving the request from the process execution editing tool 27, the workflow engine 25 obtains the process-related activities list from the process instance database 26.

In step S12, the workflow engine 25 transmits a response reporting the obtaining of the process-related activities list to the process execution editing tool 27, the response including the process-related activities list.

In step S13, receiving the process-related activities list, the process execution editing tool 27 creates a screen including the process-related activities list and displays the screen to a user. Then, the process execution editing tool 27 transmits a request to give an instruction to activate (start) an activity specified by the user or the like to the workflow engine 25.

In step S14, receiving the request from the process execution editing tool 27, the workflow engine 25 changes the status (state) of the specified activity stored in the process instance database 26 to ACTIVATED.

On the other hand, in step S15, the workflow application 24 transmits a request to obtain a list of activities whose status is ACTIVATED to the workflow engine 25.

In step S16, receiving the request from the workflow application 24, the workflow engine 25 obtains the ACTIVATED activities list from the process instance database 26.

In step S17, the workflow engine 25 transmits a response reporting the obtaining of the ACTIVATED activities list to the workflow application 24, the response including the ACTIVATED activities list.

In step S18, the workflow application 24 creates a screen including the ACTIVATED activities list and displays the screen to the user. When the user, for instance, selects an activity from the ACTIVATED activities list and executes the activity, the workflow application 24 transmits a request to give an instruction to change the status of the activity whose execution has been completed by the user to COMPLETED to the workflow engine 25.

In step S19, receiving the request from the workflow application 24, the workflow engine 25 changes the status of the specified activity stored in the process instance database 26 to COMPLETED.

Further, in step S20, the workflow engine 25 performs a process driving operation to update the status of the corresponding activity of the process.

By performing processing as illustrated in FIG. 6, an activity relating to a process in execution can be executed in advance of other activities.

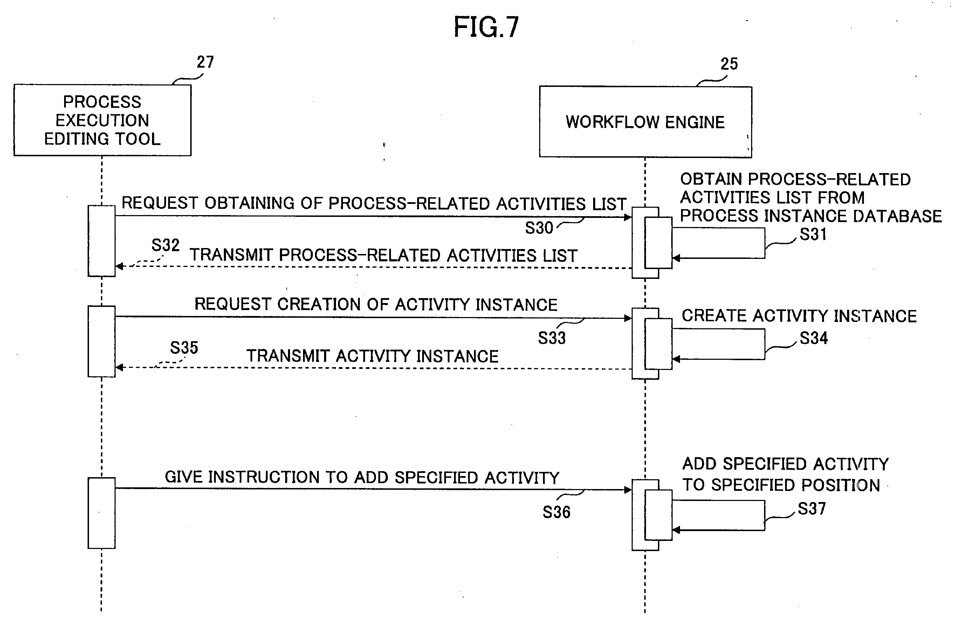

Next, a description is given, with reference to FIG. 7, of addition of an activity as another example of the editing of a process instance flow in the process execution editing tool 27. FIG. 7 is a sequence diagram for illustrating addition of an activity.

First, in step S30, the process execution editing tool 27 transmits a request to obtain a list of activities relating to a process to the workflow engine 25. In step S31, receiving the request from the process execution editing tool 27, the workflow engine 25 obtains the process-related activities list from the process instance database 26.

In step S32, the workflow engine 25 transmits a response reporting the obtaining of the process-related activities list to the process execution editing tool 27, the response including the process-related activities list.

In step S33, the process execution editing tool 27 transmits a request to create an activity instance to the workflow engine 25.

In step S34, receiving the request from the process execution editing tool 27, the workflow engine 25 creates the activity instance.

In step S35, the workflow engine 25 transmits, for instance, a response reporting the creation of the activity instance to the process execution editing tool 27, the response including the created activity instance (activity).

In step S36, the process execution editing tool 27 creates a screen including the process-related activities list and/or the created activity, and displays the screen to a user. Then, the process execution editing tool 27 transmits a request to give an instruction to add the activity specified by the user to the workflow engine 25, the request including the activity to be added and the position thereof specified by the user.

In step S37, receiving the request from the process execution editing tool 27, the workflow engine 25 duplicates a transition connected to an activity of the addition position, and replaces the identifier of the activity of the addition position with the identifier of the new activity to be added. At this point, the state of the new activity and the condition (state) of the duplicated transition are set, being appropriately changed from the state of the activity of the addition position and the condition of the original transition.

By performing processing as illustrated in FIG. 7, an activity can be added to a process in execution.

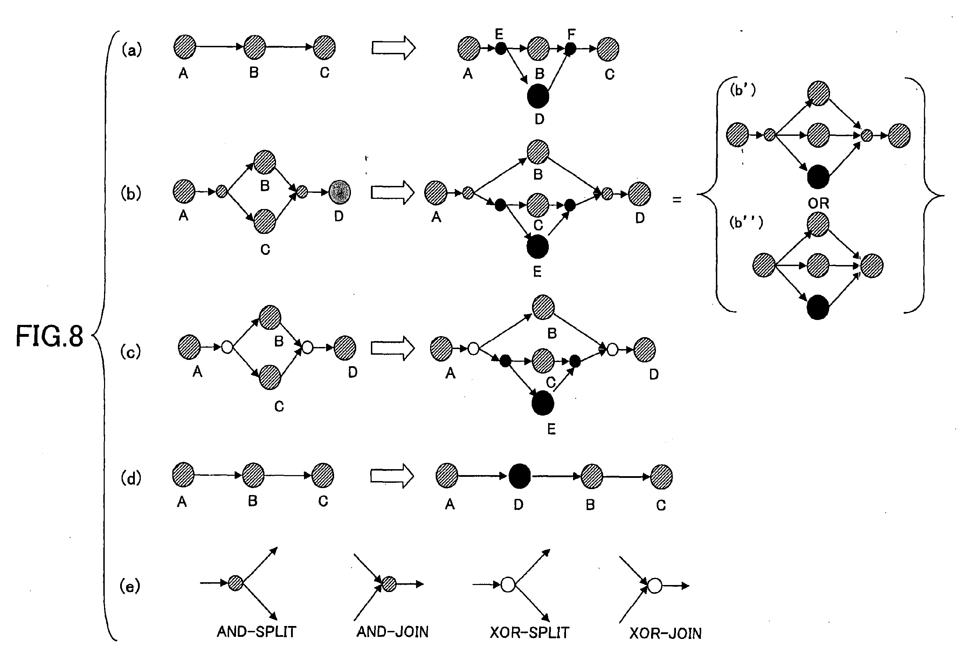

Next, a description is given, with reference to FIG. 8, of more specific examples of the addition of an activity. FIG. 8 is a diagram for illustrating more specific examples of the addition of an activity.

Referring to FIG. 8, first, (a) shows a case where ACTIVITY D is added to the position of ACTIVITY B as an activity to be processed or executed in parallel. In order to add ACTIVITY D to the position of ACTIVITY B, ACTIVITY E, which is a dummy activity performing no processing, is added between ACTIVITY A and ACTIVITY B so as to cause splitting into (the threads of) ACTIVITY B and ACTIVITY D, and dummy ACTIVITY F is added between ACTIVITY B and ACTIVITY C so as to join (the threads of) ACTIVITY B and ACTIVITY D.

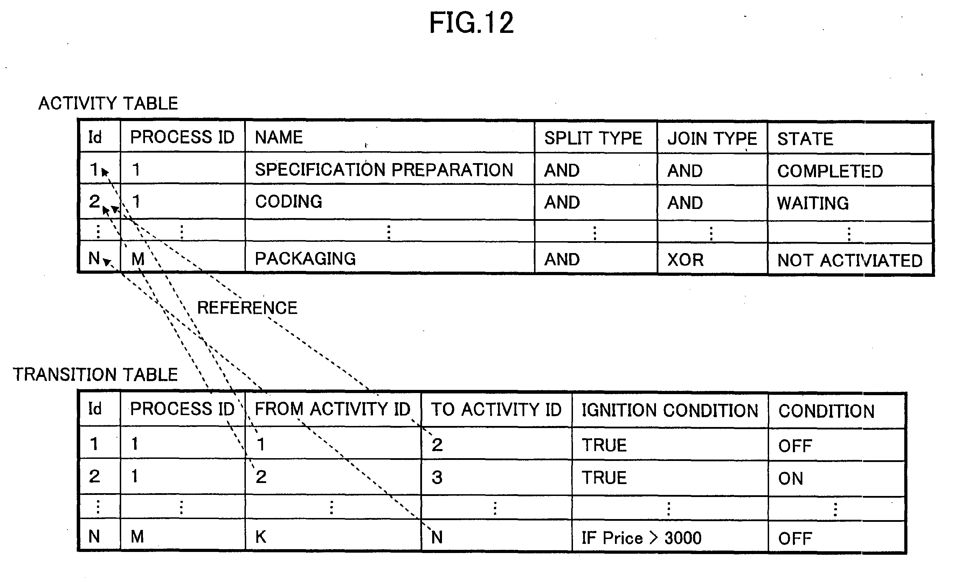

In the case of adding an activity as illustrated in (a) of FIG. 8, for instance, information on the newly added activity is added to an activity table (FIG. 12) included in the process instance database 26, and new transitions resulting from the addition of ACTIVITY D are added to a transition table (FIG. 12) included in the process instance database 26. For instance, in the transition table, a transition whose starting point and end point are ACTIVITY A and ACTIVITY B, respectively, has its end point changed to ACTIVITY E, and a transition whose starting point and end point are ACTIVITY B and ACTIVITY C, respectively, has its end point changed to ACTIVITY F.

Next, in FIG. 8, (b) shows a case where ACTIVITY E to be processed in parallel is added to the position of ACTIVITY C. The chart including added ACTIVITY E of (b) is equivalent to a chart (b') or a chart (b"), and accordingly, is illustrated as (b') or (b") in the following drawings.

In FIG. 8, (c) also shows a case where ACTIVITY E to be processed in parallel is added to the position of ACTIVITY C. However, compared with (b), (c) includes not only AND-Split and AND-Join but also XOR-Split and XOR-Join illustrated in (e).

In (a) through (c) of FIG. 8, the cases of adding a new activity to the position of an existing activity as an activity to be processed in parallel are illustrated. Alternatively, an activity may be added so as to be processed in series as illustrated in (d), in which new ACTIVITY D is added between ACTIVITY A and ACTIVITY B.

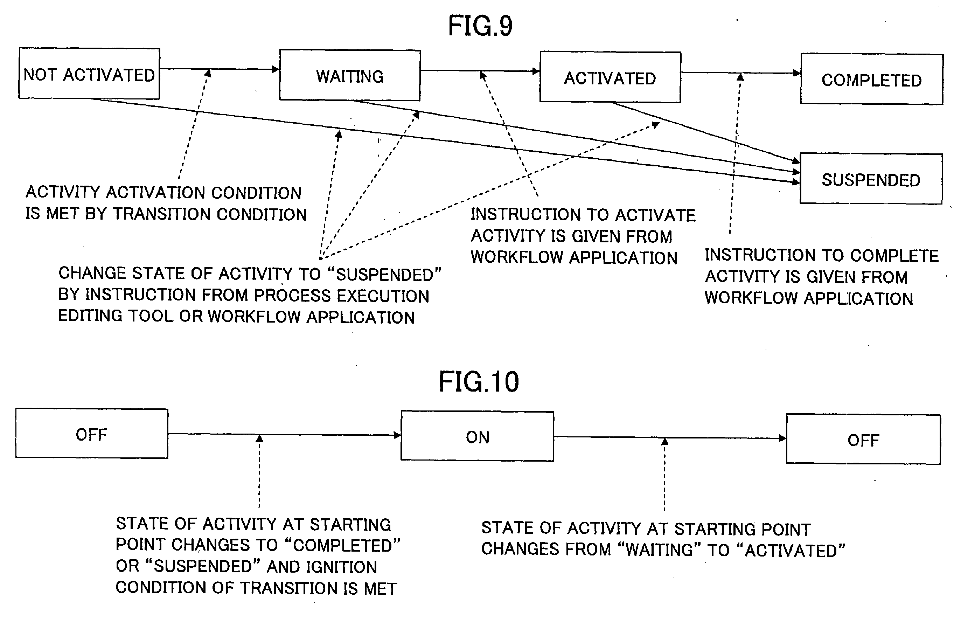

A description is given below, with reference to FIG. 9, of an activity state transition model. FIG. 9 is a diagram for illustrating an activity state transition model.

In FIG. 9, NOT ACTIVATED indicates that an activity remains unexecuted, WAITING indicates that an activity waits to be processed, ACTIVATED indicates that an activity is activated (being processed), COMPLETED indicates that an activity is completed, and SUSPENDED indicates that an activity is suspended.

Referring to FIG. 9, when a condition for activating (starting) an activity is met by the transition condition, the state of the activity makes a transition from NOT ACTIVATED to WAITING. Here, meeting a condition for activating an activity means that the conditions (states) of all transitions to the activity become ON if the activity is preceded by AND-Join, and that the condition of at least one of the transitions to the activity becomes ON if the activity is preceded by XOR-Join.

When an instruction to activate (start) the activity is given from the workflow application 24 through the workflow engine 25, the state of the activity makes a transition from WAITING to ACTIVATED. When an instruction to complete the activity is given from the workflow application 24 through the workflow engine 25, the state of the activity makes a transition from ACTIVATED to COMPLETED.

When an instruction to change the state of the activity to SUSPENDED is given from the process execution editing tool 27 or the workflow application 24 through the workflow engine 25, the state of the activity makes a transition from NOT ACTIVATED, WAITING, or ACTIVATED to SUSPENDED.

The state of the activity is included in the activity table of the process instance database 26 as illustrated below in FIG. 12.

A description is given, with reference to FIG. 10, of a transition condition (state) transition model. FIG. 10 is a diagram for illustrating a transition condition transition model.

Referring to FIG. 10, when the state of an activity at a starting point (a starting-point activity) changes to COMPLETED or SUSPENDED and the ignition condition of a transition is met, the condition (state) of the transition makes a transition from OFF to ON. In more detail, if the activity is followed by AND-Split, the conditions of all transitions from the activity make a transition to ON when the state of the activity changes to COMPLETED or SUSPENDED. On the other hand, if the activity is followed by XOR-Split, the ignition condition of a transition is checked from the activity, and when the ignition condition of the transition is met, the condition of the transition makes a transition to ON.

Further, when the state of an activity at an end point changes from WAITING to ACTIVATED, the condition of the transition makes a transition from ON to OFF.

When the state of the activity at the end point changes to SUSPENDED, the condition of the transition makes no transition.

The condition of the transition is included in the transition table of the process instance database 26 as illustrated below in FIG. 12.

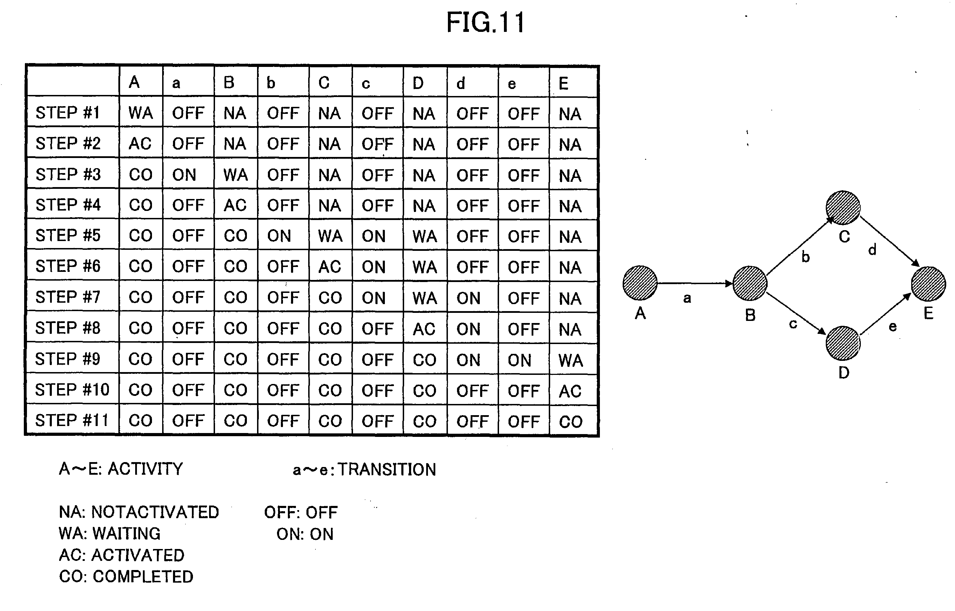

Next, a description is given, with reference to FIG. 11, of a state transition of activities and transitions. FIG. 11 is a diagram illustrating a state transition of activities and transitions.

Further, a description is given, with reference to FIG. 12, of tables included in the process instance database 26. FIG. 12 illustrates the activity and transition tables included in the process instance database 26.

Referring to FIG. 12, the activity table includes Id, Process ID, Name, Split Type, Join Type, and State as items.

In Id, an identifier identifying an activity is stored. In Process ID, an identifier identifying a process is stored. In Name, an activity name is stored. In Split Type, AND or XOR is stored as a type of splitting. In Join Type, AND or XOR is stored as a type of joining. In State, NOT ACTIVATED, WAITING, ACTIVATED, COMPLETED, or SUSPENDED is stored as an activity state.

Referring to FIG. 12, the transition table includes Id, Process ID, From Activity ID, To Activity ID, Ignition Condition, and Condition as items.

In Id, an identifier identifying an activity is stored. In Process ID, an identifier identifying a process is stored. In From Activity ID, an identifier identifying a starting-point activity is stored. In To Activity ID, an identifier identifying an end-point activity is stored. In Ignition Condition, the ignition condition of a transition is stored. In Condition, ON or OFF is stored as a transition condition (state).

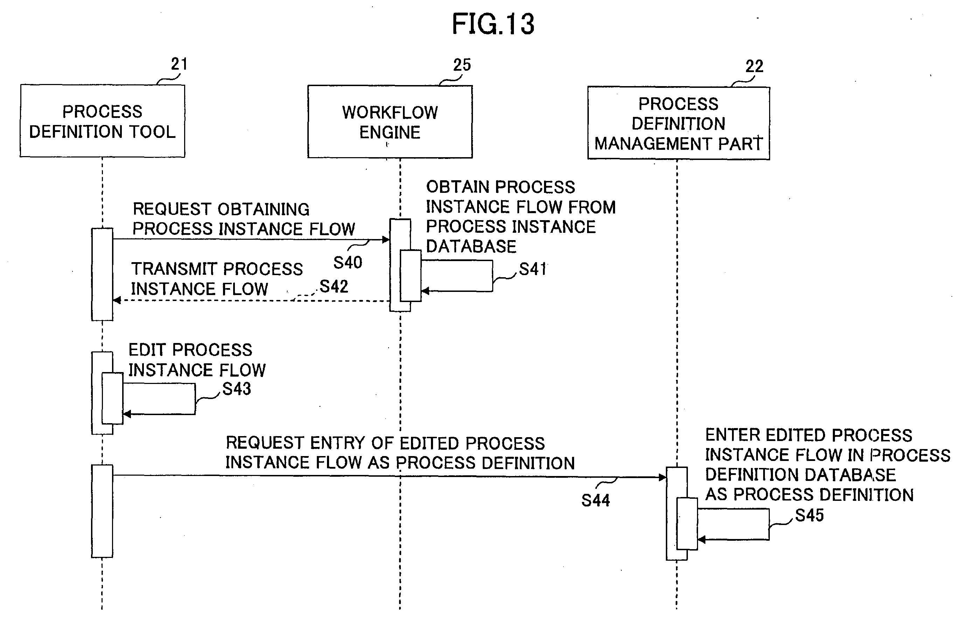

Next, a description is given, with reference to FIG. 13, of reuse of a process instance flow in the process definition tool 21. FIG. 13 is a sequence diagram for illustrating reuse of a process instance flow.

First, in step S40 of FIG. 13, the process definition tool 21 transmits a request to obtain a process instance flow to the workflow engine 25.

In step S41, receiving the request from the process definition tool 21, the workflow engine 25 obtains the process instance flow from the process instance database 26.

In step S42, the workflow engine 25 transmits a response reporting the obtaining of the process instance flow to the process definition tool 21, the response including the obtained process instance flow.

In step S43, receiving the process instance flow, the process definition tool 21 creates a screen including the process instance flow and displays the screen to a user. Then, the process definition tool 21 edits the process instance flow based on a request from the user.

In step S44, based on a request from the user or the like, the process definition tool 21 creates an entry request to enter the edited process instance flow as a process definition, and transmits the entry request to the process definition management part 22, the entry request including the edited process instance flow.

In step S45, receiving the entry request from the process definition tool 21, the process definition management part 22 enters the process instance flow included in the entry request in the process definition database 23 as a process definition.

By performing processing as illustrated in FIG. 13, a process instance flow can be reused as a process definition.

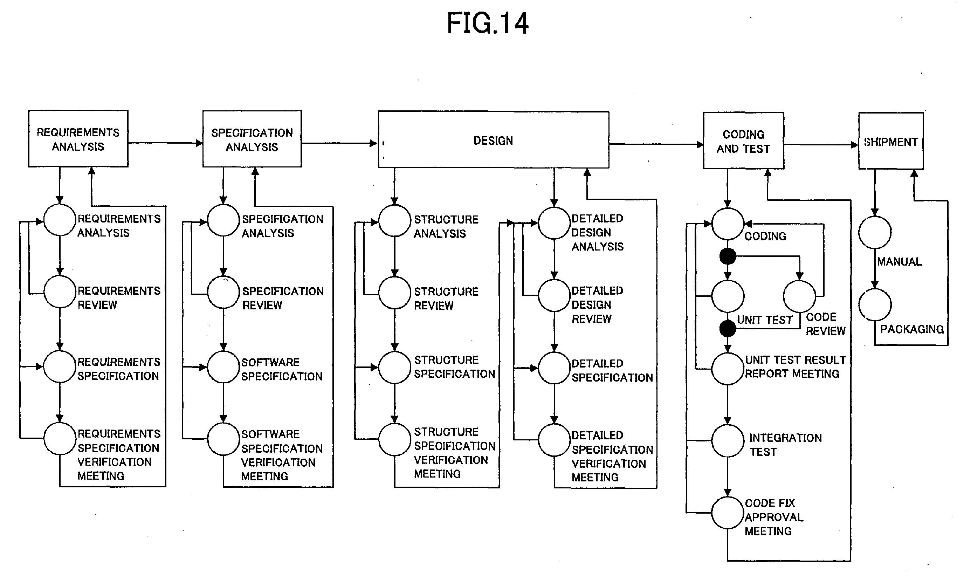

Next, a description is given, with reference to FIG. 14, of a process. FIG. 14 is a diagram illustrating a development process as an example of the process. The development process includes requirements analysis, specification analysis, design, coding and testing, and shipment as sub flows.
Further, there are activities such as meetings such as analysis meetings, review meetings, and verification meetings, document (requirements specification, software specification, structure specification, detailed specification, and manual) preparation, coding, unit testing, integration testing, and packaging.

In FIG. 14, a black circle indicates AND-Join or AND-Split, and the other branches indicate XOR-Join or XOR-Split.

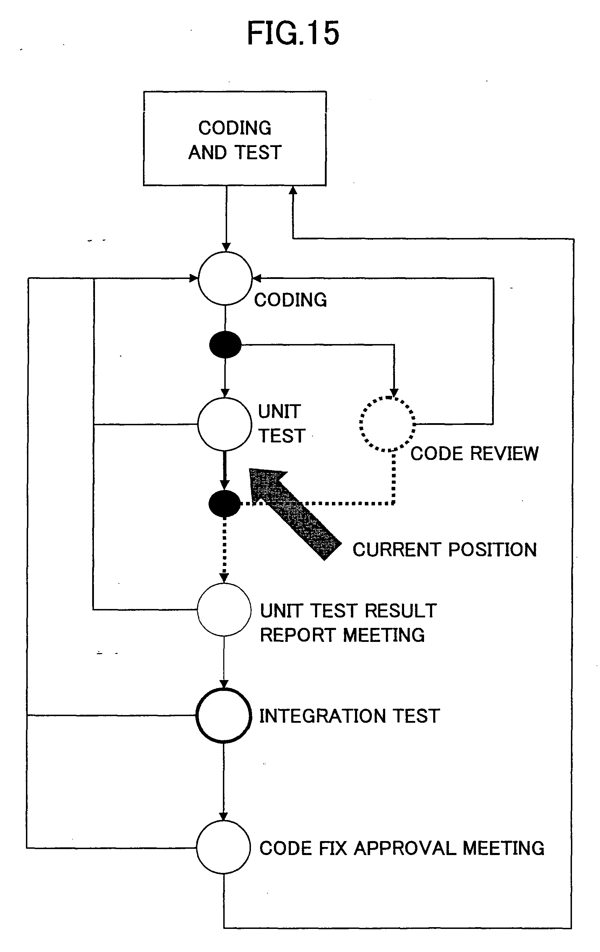

Next, a description is given, with reference to FIG. 15, of an example of the suspension of an activity. FIG. 15 is a diagram for illustrating an example of the suspension of an activity.

Referring to FIG. 15, at the current position, the activity "unit test" has been completed, and the activity "code review" is waiting to be executed (processed).

For instance, if a user decides to postpone the activity "code review" in order to hurry to execute the activity "integration test," and changes the state of the activity "code review" to SUSPENDED by performing a predetermined operation, the transition between the activity "code review" and the activity "unit test result reporting meeting" becomes ON.

Then, the activation condition of the activity "unit test result reporting meeting" is satisfied, so that the state of the activity "unit test result reporting meeting" changes to WAITING, and the activity "unit test result reporting meeting" becomes executable.

The suspended activity may become executable at any moment thereafter. Further, by including the completion of the activity "code review" in the termination condition of the process illustrated in FIG. 15, it is possible to prevent the activity "code review" from ending up in being left unprocessed.

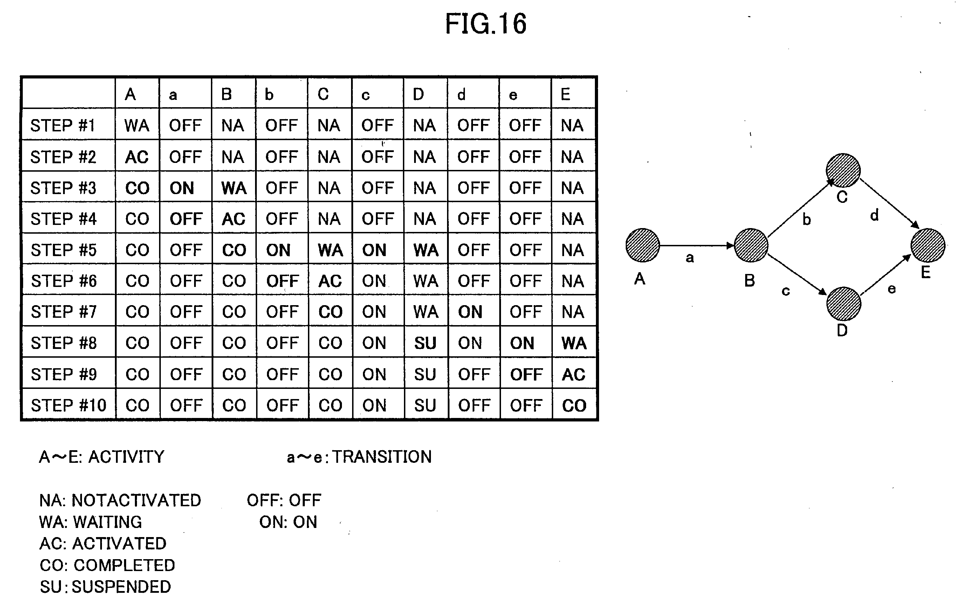

Next, a description is given, with reference to FIG. 16, of a state transition of activities and transitions in the case of suspending an activity. FIG. 16 is a diagram illustrating a state transition of activities and transitions in the case of suspending an activity.

FIG. 16 shows a case where ACTIVITY D is suspended in STEP 8. As shown in FIG. 16, suspension of an activity (for instance, ACTIVITY D) causes no change in the condition (state) of a transition (for instance, TRANSITION c) toward the suspended activity.

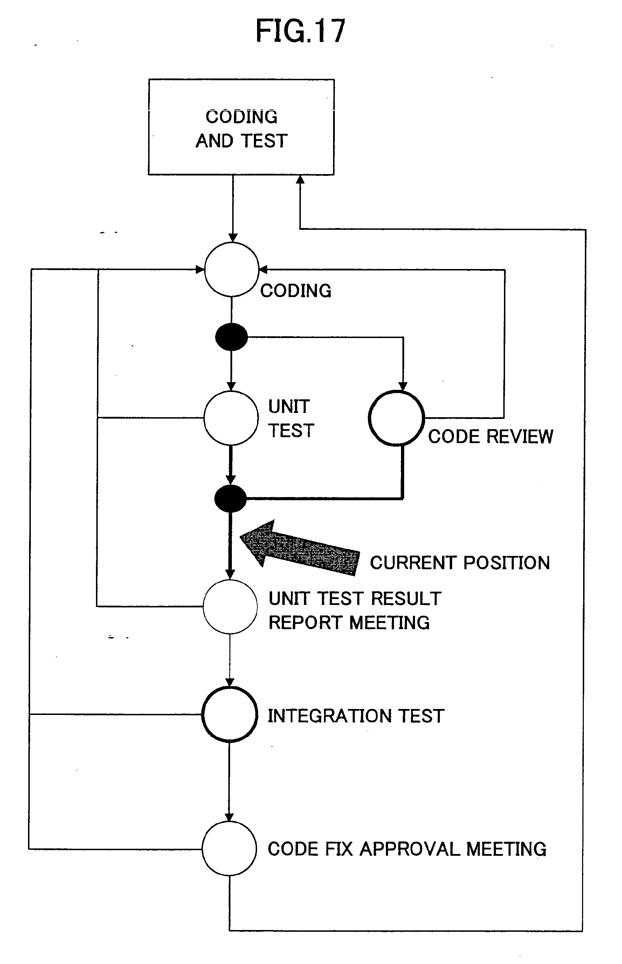

Next, a description is given, with reference to FIG. 17, of an example of the advance execution of an activity. FIG. 17 is a diagram for illustrating an example of the advance execution of an activity.

Referring to FIG. 17, at the current position, the activity "unit test" has been completed, and the activity "code review" is waiting to be executed (processed).

For instance, at this point, a user selects the activity "integration test" in order to hurry to execute the activity "integration test," and changes the state of the activity "integration test" to ACTIVATED by performing a predetermined operation.

When the activity "code review" and the activity "unit test result report meeting" are completed after completion of the activity "integration test," the state of the activity "integration test" is prevented from becoming WAITING because execution of the activity "integration test" has been completed.

When execution of the activity "integration test" is completed, the state of the activity "code fix approval meeting" becomes WAITING irrespective of whether the other activities are completed.

By including completion of the activity "code review" and the activity "unit test result report meeting" in the termination condition of the process illustrated in FIG. 17, it is possible to prevent the activity "code review" and the activity "unit test result report meeting" from ending up in being left unprocessed.

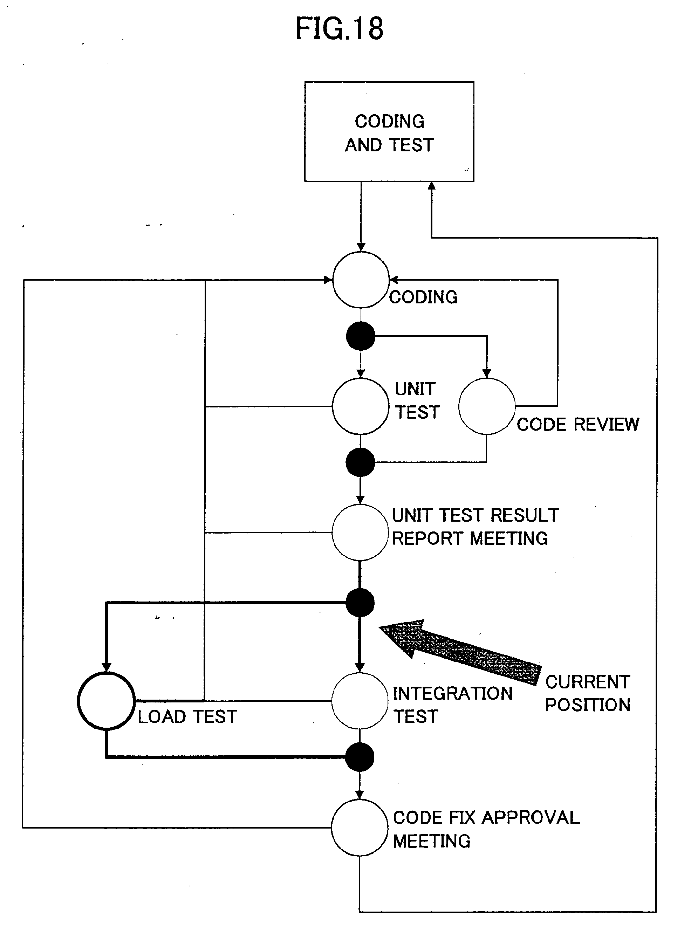

Next, a description is given, with reference to FIG. 18, of an example of the addition of an activity. FIG. 18 is a diagram for illustrating an example of the addition of an activity.

Referring to FIG. 18, at the current position, the activity "unit test result report meeting" is completed, and the activity "integration test" is waiting to be executed (processed).

For instance, at this point, if a user specifies the activity "integration test" and adds "load test" as an activity to be processed in parallel, the workflow engine 25 duplicates the transition of the activity "integration test", and changes its end point from the activity "integration test" to the activity "load test."

At this point, the condition (state) of the transition from the activity "unit test result report meeting" to the activity "load test" becomes ON.

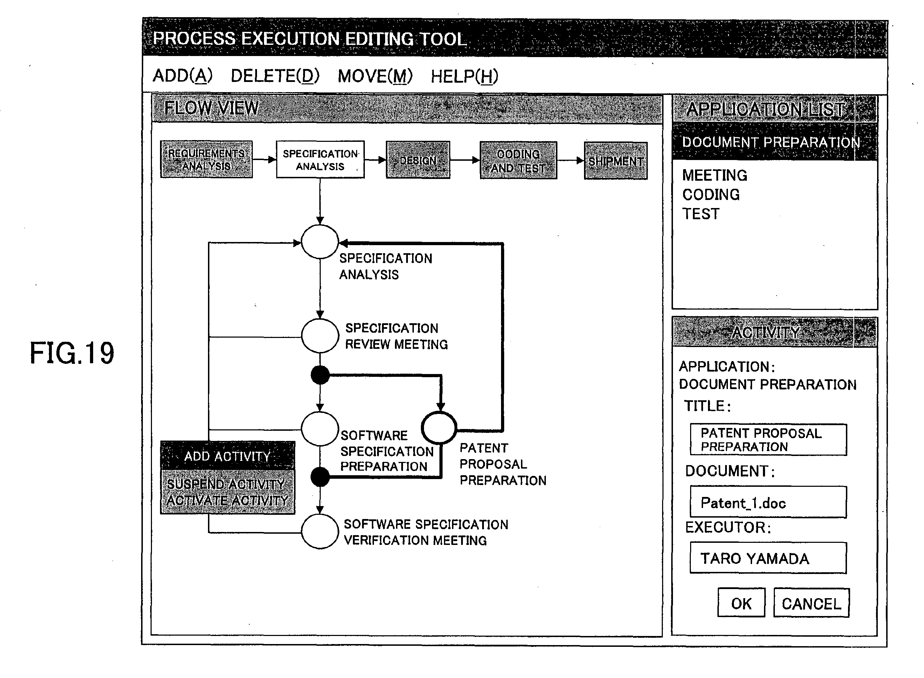

Next, a description is given, with reference to FIG. 19, of a GUI in the process execution editing tool 27 installed in the client 3. FIG. 19 is a diagram illustrating a GUI in the process execution editing tool 27.

For instance, as shown in FIG. 19, a user positions a mouse cursor on "SOFTWARE SPECIFICATION PREPARATION" among the activities of the flow of a process in execution, and performs a right click.

Then, a menu opens as shown in FIG. 19, and when the user selects "ADD ACTIVITY," the upper right pane changes to an application list.

When the user selects an application from the application list, the contents of the activity set items of the lower right pane change. In the case of FIG. 19, the user selects "DOCUMENT PREPARATION" as an application.

The user sets parameters in the lower right pane, and presses an OK button to add an activity. Then, the added activity and the transitions relating to the activity are reflected in the process flow on the FLOW VIEW screen and displayed.

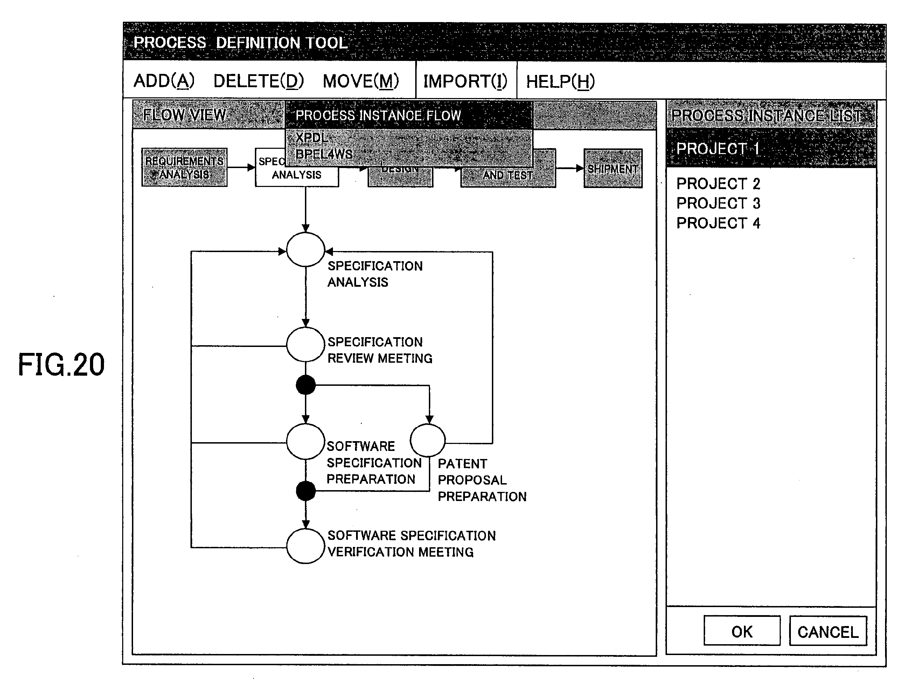

Next, a description is given, with reference to FIG. 20, of a GUI in the process definition tool 21 installed in the client 3. FIG. 20 is a diagram illustrating a GUI in the process definition tool 21.

For instance, when a user selects PROCESS INSTANCE FLOW from the menu of IMPORT of a menu bar, the right pane changes to a process instance list.

When the user selects a process instance flow from the process instance list, and presses an OK button, the process instance flow is displayed in the left pane, and the process instance list is closed.

When the user selects ADD from the menu bar after editing the process instance flow, the edited process instance flow or process instance is entered as a process definition.

### [Second Embodiment]

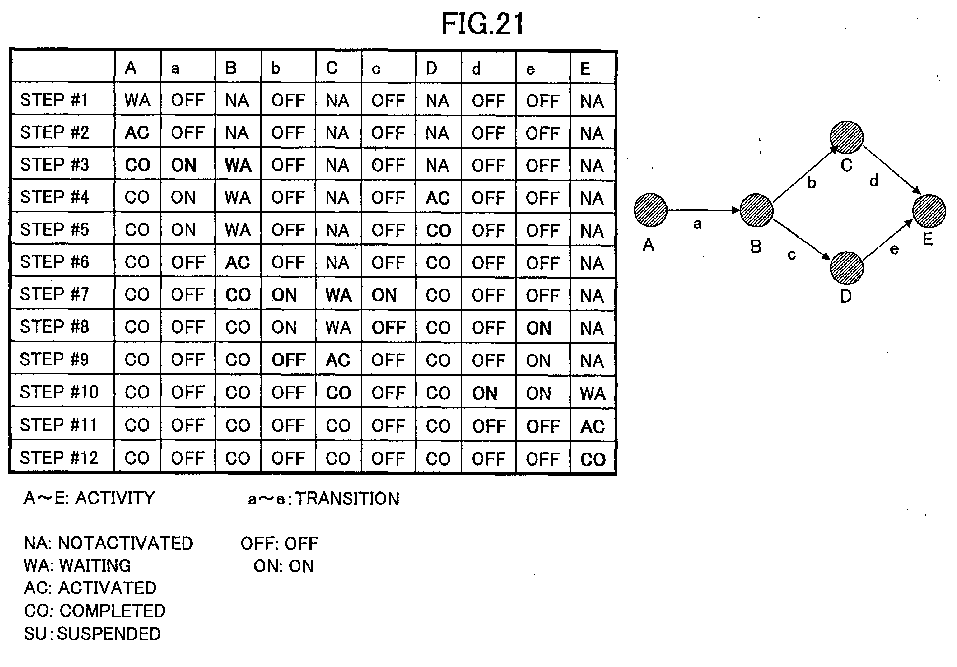

Next, a description is given of advance execution of an activity and suspension of an activity according to a second embodiment of the present invention. FIG. 21 is a diagram illustrating a state transition of activities and transitions in the case of advance execution of an activity according to the second embodiment of the present invention.

FIG. 21 shows a case where execution of ACTIVITY D is taken in advance and started in STEP 4, and the execution is completed in STEP 5. As shown in FIG. 21, advance execution of an activity (for instance, ACTIVITY D) causes no change in the condition (state) of a transition (for instance, TRANSITION c) toward the activity. Neither does completion of the advance execution of the activity (ACTIVITY D) cause any change in the condition of the transition (for instance, TRANSITION e) toward the next activity (for instance, ACTIVITY E).

Referring to FIG. 21, when the condition of a transition (for instance, TRANSITION c) toward an activity (for instance, ACTIVITY D) becomes ON in a step, in the next step, the condition of a transition (for instance, TRANSITION e) stemming from the activity (ACTIVITY D) becomes ON, and the condition of the transition (TRANSITION c) toward the activity (ACTIVITY D) becomes OFF.

As a practical matter, a situation where actual work is carried out in a way different from a defined flow frequently occurs. Accordingly, by allowing (easily enabling) advance execution and suspension of an activity as described above, the flow of a process in execution may be different from its process definition, so that it is possible to handle a workflow in accordance with an actual work situation. It may also be possible to consider workflows that execute respective tasks as different process definitions. However, in such workflows, the situations of the respective tasks should be managed as different flows from a viewpoint of a position in charge of work management. Therefore, when there is a lot of work, it is difficult to understand the overall situation of the work.

On the other hand, according to the workflow of the present invention that allows (easily enables) advance execution and suspension of an activity, the situations of all tasks can be managed with the same flow. Accordingly, a work manager can view the tasks that actually proceed in different flows from a fixed flow (the same flow). This enables the work manager to understand the situations of the respective tasks from an overall viewpoint. Addition of an activity is also allowed (easily enabled) without a significant change in the original flow (process definition). Accordingly, the advantage in work situation management is not impaired.

In order to judge all tasks actually proceeding in different flows by a fixed flow, it is preferable not to delete an activity. Further, in the case of deleting an activity from a flow, if the branching of the flow is complicated, sometimes the branching conditions cannot be maintained so that it is difficult to maintain the consistency of the flow. Therefore, according to the present invention, flow consistency is maintained by introducing the concept (and system) of suspension of an activity, so that all tasks can be judged by a fixed flow.

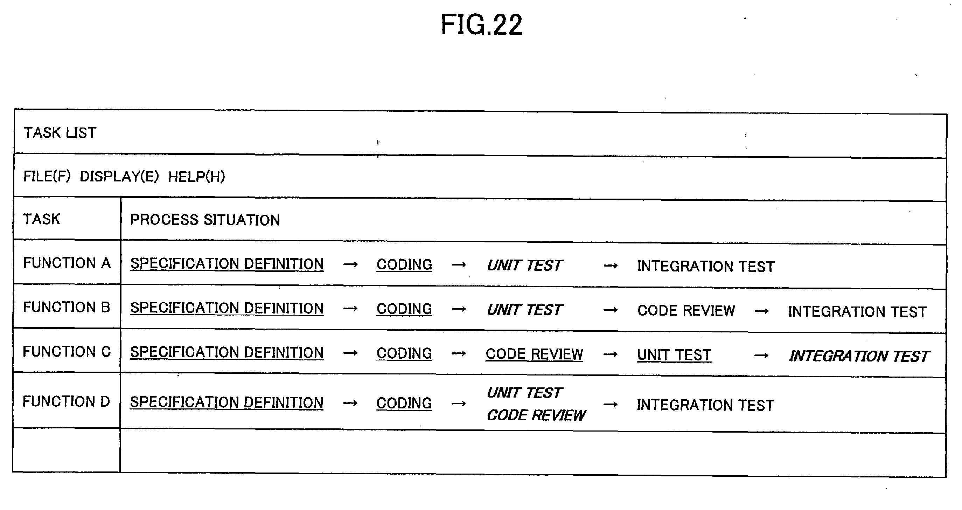

A description is given below, with reference to FIG. 22, of the case of displaying multiple tasks as different flows. FIG. 22 is a diagram illustrating a VIEW screen in the case of displaying multiple tasks as different flows. The term "task" refers to a single process instance, and a "task list" refers to a list of tasks. The "task" may be considered as work.

On the VIEW screen as illustrated in FIG. 22, it is difficult for a user to correctly understand the situation of each process (or the situation of each task) unless the user looks closely at the entire flow of each task. In particular, in the case of a complicated flow, it becomes more difficult to understand a process situation.

For instance, on the VIEW screen as illustrated in FIG. 22, an activity in execution is indicated in bold and italic, and a completed activity is shown underlined. Further, in such workflows, basically, processing proceeds as defined by a flow, so that the state of each activity before an activity in execution is "COMPLETED."

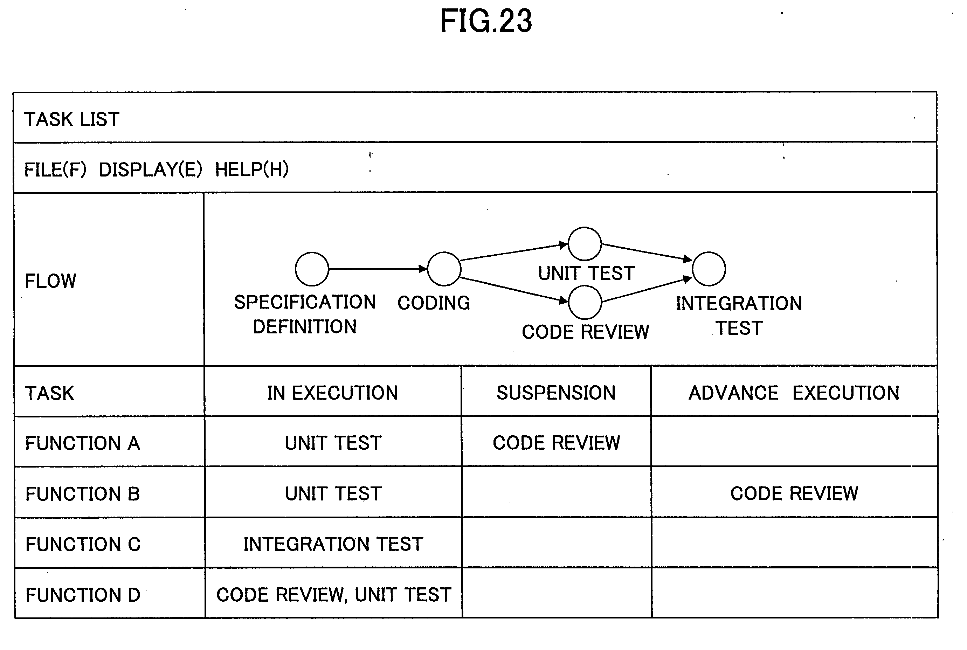

Next, a description is given, with reference to FIG. 23, of the case of displaying multiple tasks, applying the tasks to a fixed flow. FIG. 23 is a diagram illustrating a VIEW screen according to the second embodiment of the present invention, in which multiple flows are displayed, being applied to a fixed flow.

In a VIEW screen as illustrated in FIG. 23, basically, a user has only to look at an activity in execution. By exceptionally looking at an activity that is suspended or executed in advance, the user can correctly understand each process situation with ease.

The VIEW screen illustrated in FIG. 23 is created and presented to the user by the workflow application 24. The workflow application 24 obtains a task list from the workflow engine 25, and creates a VIEW screen as illustrated in FIG. 23.

### [Third Embodiment]

A description is given below of a case where authority for each operation (operational authority, access right, or access control) with respect to an object (a process object) relating to a process in execution is defined and managed in a workflow system, and the authority is checked with respect to each operation request according to a third embodiment of the present invention.

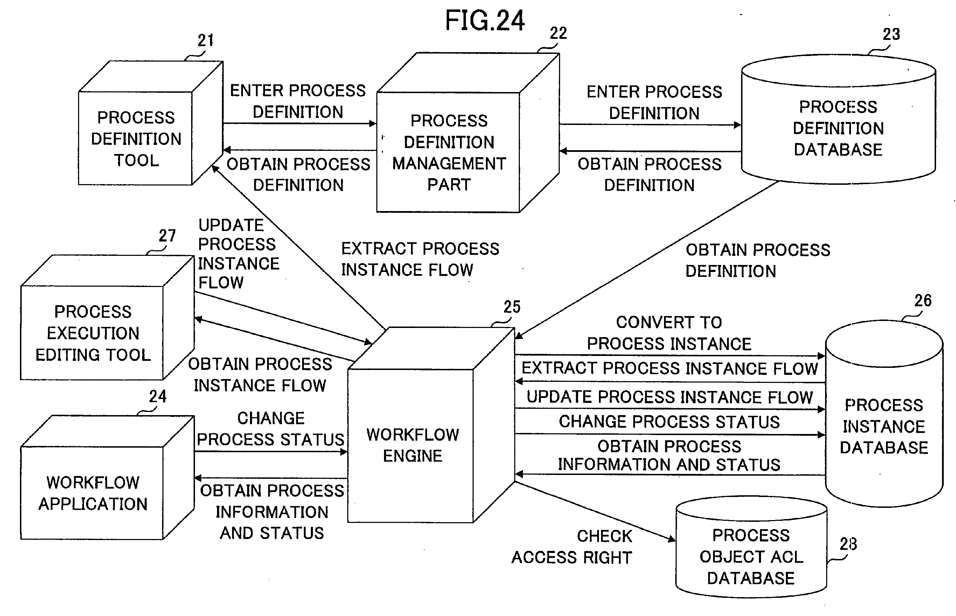

First, a description is given, with reference to FIG. 24, of a configuration of software installed in the server 1 and the client 3 according to the third embodiment of the present invention. FIG. 24 is a schematic diagram illustrating a software configuration according to the third embodiment of the present invention.

The software configuration illustrated in FIG. 24 includes the process definition tool 21, the process definition management part 22, the process definition database 23, the workflow application 24, the workflow engine 25, the process instance database 26, the process execution editing tool 27, and a process object ACL (Access Control List) database 28. The process object ACL database 28, which is a program corresponding to software, is provided to the server 1 by the recording medium 14 such as a CD-ROM, or is downloaded to the server 1 through the network.

The workflow engine 25 performs the processing illustrated in the first embodiment. In addition, for instance, in response to a request to update a process instance flow from the process execution editing tool 27, the workflow engine 25 refers to the right of access (access right) to a corresponding process object, or the like, stored and/or managed in the process object ACL database 28, and determines (or checks) whether the requesting user (or group) has a valid access right.

The process object ACL database 28 stores and/or manages the right of access to a process object.

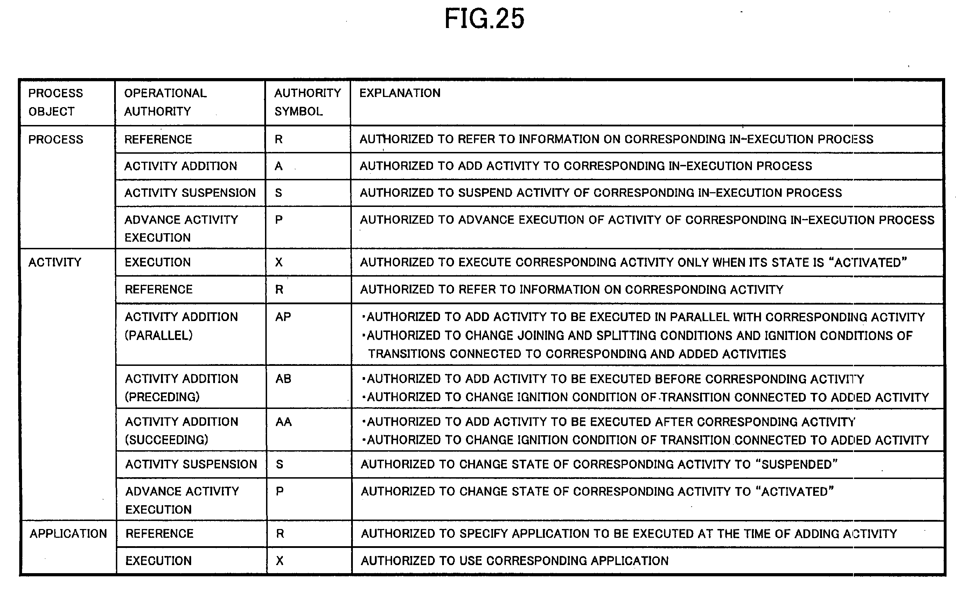

FIG. 25 is a table illustrating examples of the authority to operate a process object (process object operational authority). As illustrated in FIG. 25, for instance, a process, an activity, and an application exist as process objects. Here, the application is, for instance, the workflow application 24.

REFERENCE, ACTIVITY ADDITION, ACTIVITY SUSPENSION, and ADVANCE ACTIVITY EXECUTION exist as the authority to operate a process (process operational authority). EXECUTION, REFERENCE, ACTIVITY ADDITION (parallel), ACTIVITY ADDITION (preceding), ACTIVITY ADDITION (succeeding), ACTIVITY SUSPENSION, and ADVANCE ACTIVITY EXECUTION exist as the authority to operate an activity (activity operational authority). Further, REFERENCE and EXECUTION exist as the authority to operate an application (application operational authority).

The process operational authority REFERENCE is the authority to refer to information on a corresponding process in execution (in-execution process). The process operational authority ACTIVITY ADDITION is the authority to add an activity to a corresponding in-execution process. The process operational authority ACTIVITY SUSPENSION is the authority to suspend an activity of a corresponding in-execution process. The process operational authority ADVANCE ACTIVITY EXECUTION is the authority to advance execution of an activity of a corresponding in-execution process.

The activity operational authority EXECUTION is the authority to execute a corresponding activity only when the state of the activity is ACTIVATED. The activity operational authority REFERENCE is the authority to refer to information on a corresponding activity. The activity operational authority ACTIVITY ADDITION (parallel) is the authority to add an activity to be executed in parallel with a corresponding activity and the authority to change the joining and splitting conditions and the ignition conditions of the transitions connected to the corresponding and added activities.

The activity operation authorization ACTIVITY ADDITION (preceding) is the authorization to add an activity to be executed so that the added activity precedes a corresponding activity and the authorization to change the ignition condition of the transition connected to the added activity. The activity operation authorization ACTIVITY ADDITION (succeeding) is the authorization to add an activity to be executed so that the added activity succeeds a corresponding activity and the authorization to change the ignition condition of the transition connected to the added activity.

The activity operation authorization ACTIVITY SUSPENSION is the authorization to change the state of a corresponding activity to SUSPENDED. The activity operation authorization ADVANCE ACTIVITY EXECUTION is the authorization to change the state of a corresponding activity to ACTIVATED.

The application operational authority REFERENCE is the authority to specify an application to be executed at the time of adding an activity. The application operational authority EXECUTION is the authority to use a corresponding application. A user (or group) without the authority to execute (use) an application cannot be specified as the executor of an activity using the application.

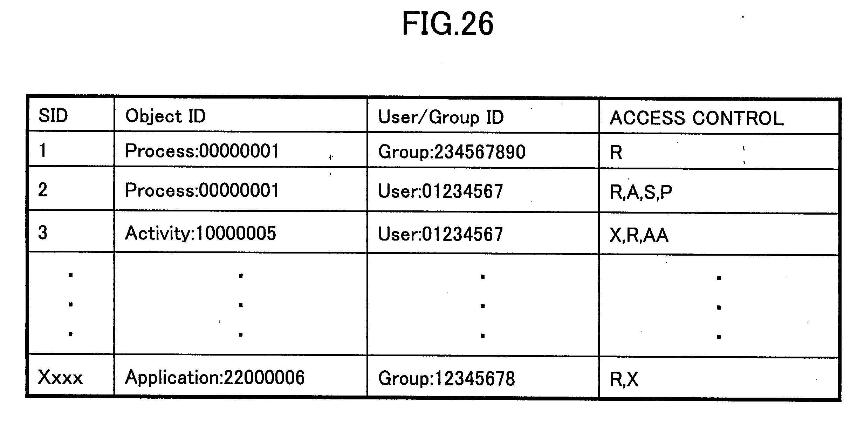

FIG. 26 illustrates a table of the process object ACL database 28.

Referring to FIG. 26, the table of the process object ACL database 28 includes SID, Object ID, User/Group ID, and Access Control as items.

A unique ID is stored in SID. The ID of a process object is stored in Object ID. A user ID identifying a user or a group ID identifying a group is stored in User/Group ID. The authority symbols illustrated in FIG. 25 (that is, information identifying operational authority, access right, or access control) are stored in Access Control.

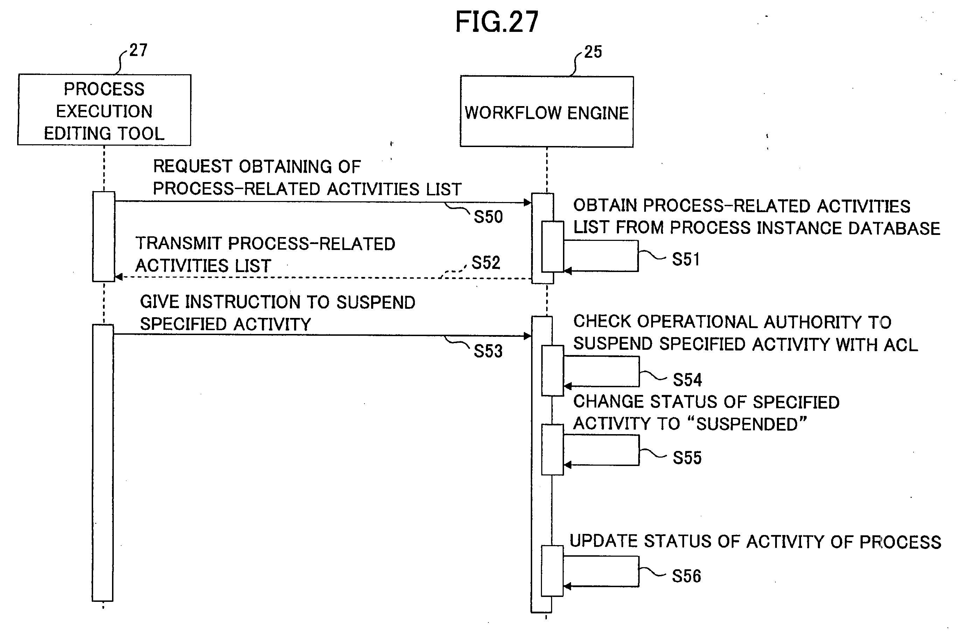

A description is given below, with reference to FIG. 27, of suspension of an activity including a check on operational authority according to the third embodiment. FIG. 27 is a sequence diagram for illustrating suspension of an activity including a check on operational authority according to the third embodiment.

Referring to FIG. 27, first, in step S50, the process execution editing tool 27 transmits a request to obtain a list of activities relating to a process to the workflow engine 25.

In step S51, receiving the request from the process execution editing tool 27, the workflow engine 25 obtains the process-related activities list from the process instance database 26.

In step S52, the workflow engine 25 transmits a response reporting the obtaining of the process-related activities list to the process execution editing tool 27, the response including the process-related activities list.

In step S53, receiving the process-related activities list, the process execution editing,tool 27 creates a screen including the process-related activities list and displays the screen to a user. Then, the process execution editing tool 27 transmits a request to give an instruction to suspend an activity specified by the user or the like to the workflow engine 25.

In step S54, receiving the request from the process execution editing tool 27, the workflow engine 25 refers to, for instance, a table stored in the process object ACL database 28 as illustrated in FIG. 26, and determines (checks) whether the user or a group to which the user belongs has the operational authority to suspend the specified activity.

In step S55, if the workflow engine 25 determines that the user or a group to which the user belongs has the operational authority to suspend the specified activity, the workflow engine 25 changes the status (state) of the specified activity stored in the process instance database 26 to SUSPENDED.

In step S56, the workflow engine 25 performs a process driving operation to update the status of the corresponding activity of the process.

By performing processing as illustrated in FIG. 27, it is possible to allow only an authorized user to suspend an activity relating to a process in execution.

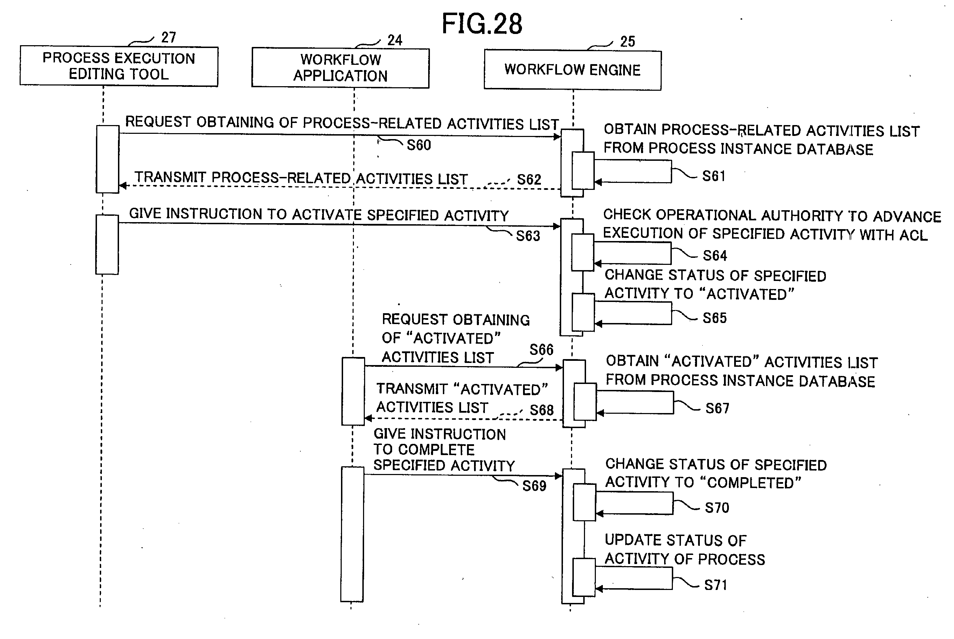

Next, a description is given, with reference to FIG. 28, of advance execution of an activity including a check on operational authority according to the third embodiment. FIG. 28 is a sequence diagram for illustrating advance execution of an activity including a check on operational authority according to the third embodiment.

Referring to FIG. 28, first, in step S60, the process execution editing tool 27 transmits a request to obtain a list of activities relating to a process to the workflow engine 25.

In step S61, receiving the request from the process execution editing tool 27, the workflow engine 25 obtains the process-related activities list from the process instance database 26.

In step S62, the workflow engine 25 transmits a response reporting the obtaining of the process-related activities list to the process execution editing tool 27, the response including the process-related activities list.

In step S63, receiving the process-related activities list, the process execution editing tool 27 creates a screen including the process-related activities list and displays the screen to a user. Then, the process execution editing tool 27 transmits a request to give an instruction to activate (start) an activity specified by the user or the like to the workflow engine 25.

In step S64, receiving the request from the process execution editing tool 27, the workflow engine 25 refers to, for instance, a table stored in the process object ACL database 28 as illustrated in FIG. 26, and determines (checks) whether the user or a group to which the user belongs has the operational authority to advance execution of the specified activity.

In step S65, if the workflow engine 25 determines that the user or a group to which the user belongs has the operational authority to advance execution of the specified activity, the workflow engine 25 changes the status (state) of the specified activity stored in the process instance database 26 to ACTIVATED.

On the other hand, in step S66, the workflow application 24 transmits a request to obtain a list of activities whose status is ACTIVATED to the workflow engine 25.

In step S67, receiving the request from the workflow application 24, the workflow engine 25 obtains the ACTIVATED activities list from the process instance database 26.

In step S68, the workflow engine 25 transmits a response reporting the obtaining of the ACTIVATED activities list to the workflow application 24, the response including the ACTIVATED activities list.

In step S69, the workflow application 24 creates a screen including the ACTIVATED activities list and displays the screen to the user. When the user, for instance, selects an activity from the ACTIVATED activities list and executes the activity, the workflow application 24 transmits a request to give an instruction to change the status of the activity whose execution has been completed by the user to COMPLETED to the workflow engine 25.

In step S70, receiving the request from the workflow application 24, the workflow engine 25 changes the status of the specified activity stored in the process instance database 26 to COMPLETED.

Further, in step S71, the workflow engine 25 performs a process driving operation to update the status of the corresponding activity of the process.

By performing processing as illustrated in FIG. 28, it is possible to allow only an authorized user to advance execution of an activity relating to a process in execution.

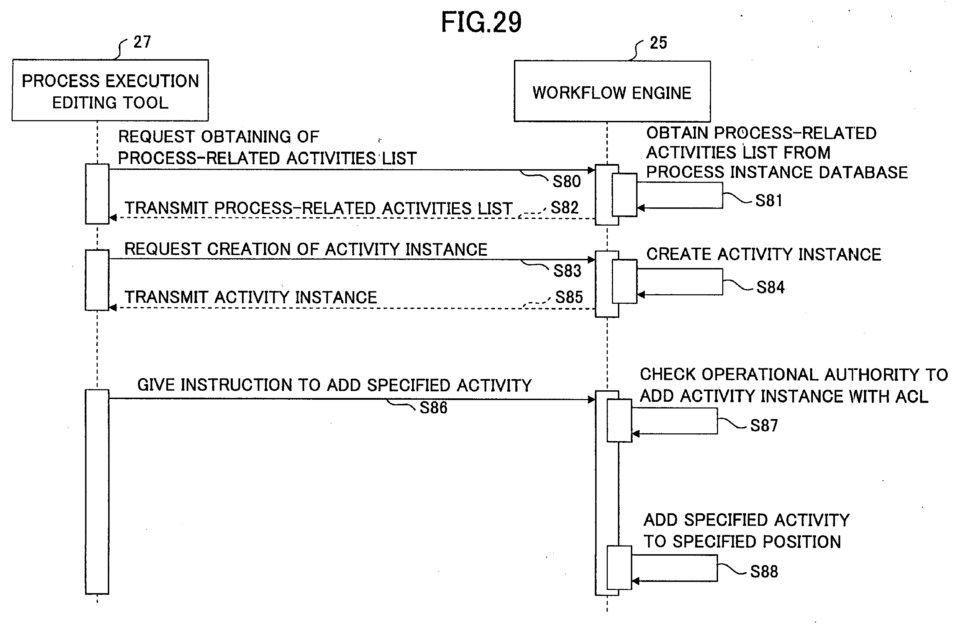

Next, a description is given, with reference to FIG. 29, of addition of an activity including a check on operational authority according to the third embodiment. FIG. 29 is a sequence diagram for illustrating addition of an activity including a check on operational authority according to the third embodiment.

Referring to FIG. 29, first, in step S80, the process execution editing tool 27 transmits a request to obtain a list of activities relating to a process to the workflow engine 25.

In step S81, receiving the request from the process execution editing tool 27, the workflow engine 25 obtains the process-related activities list from the process instance database 26.

In step S82, the workflow engine 25 transmits a response reporting the obtaining of the process-related activities list to the process execution editing tool 27, the response including the process-related activities list.

In step S83, the process execution editing tool 27 transmits a request to create an activity instance to the workflow engine 25.

In step S84, receiving the request from the process execution editing tool 27, the workflow engine 25 creates the activity instance.

In step S85, the workflow engine 25 transmits, for instance, a response reporting the creation of the activity instance to the process execution editing tool 27, the response including the created activity instance (activity).

In step S86, the process execution editing tool 27 creates a screen including the process-related activities list and/or the created activity, and displays the screen to a user. Then, the process execution editing tool 27 transmits a request to give an instruction to add the activity specified by the user to the workflow engine 25, the request including the activity to be added and the position thereof specified by the user. The process execution editing tool 27 notifies the workflow engine 25 of the position of the activity to be added by the position of the activity instance in the flow.

In step S87, receiving the request from the process execution editing tool 27, the workflow engine 25 refers to, for instance, a table stored in the process object ACL database 28 as illustrated in FIG. 26, and determines (checks) whether the user or a group to which the user belongs has the operational authority to add the specified activity to the specified position (location).

In step S88, if the workflow engine 25 determines that the user or a group to which the user belongs has the operational authority to add the specified activity to the specified position (location), the workflow engine 25 duplicates a transition connected to an activity of the addition position, and replaces the identifier of the activity of the addition position with the identifier of the new activity to be added. At this point, the state of the new activity and the condition (state) of the duplicated transition are set, being appropriately changed from the state of the activity of the addition position and the condition of the original transition.

By performing processing as illustrated in FIG. 29, it is possible to allow only an authorized user to add an activity to a process in execution.

As described above, according to the present invention, it is possible to edit (and/or update) a process in execution.

The present invention is not limited to the specifically disclosed embodiments, and variations and modifications may be made without departing from the scope of the present invention.

## Claims

1. A process editing apparatus (3), **characterized by**:
an editing part (27) configured to edit a process in execution.

2. The process editing apparatus as claimed in claim 1, wherein:
the process in execution comprises a plurality of jobs; and
the editing of the process in execution is one of addition of a job to the process in execution, advance execution of one of the jobs of the process in execution, and suspension of one of the jobs of the process in execution.

3. The process editing apparatus as claimed in claim 1 or 2, wherein the editing part obtains the process in execution from a process management apparatus performing process management.

4. The process editing apparatus as claimed in claim 1, 2 or 3, wherein the process in execution comprises a plurality of jobs forming the process, the jobs each including state information representing progress thereof.

5. The process editing apparatus as claimed in claim 1, 2, 3 or 4, wherein the editing part transmits a request to update the process in execution to a process management apparatus performing process management.

6. The process editing apparatus as claimed in any one of the preceding claims wherein the editing part transmits a request to enter the edited process in execution as a process template to a process management apparatus performing process management.

7. The process editing apparatus as claimed in claim 6, further comprising:
an entry screen display part configured to display a screen relating to the entry of the edited process.

8. The process editing apparatus as claimed in any one of the preceding claims further comprising:
an editing screen display part configured to display a screen relating to the editing of the process in execution.

9. The process editing apparatus as claimed in any one of the preceding claims, wherein:
definition that is a process template and the process in execution are different entities, and are separately operable.

10. A process management apparatus (1), **characterized by**:
a process execution control part (25) configured to control process execution,
wherein the process execution control part (25) updates a process in execution in response to a request.

11. The process management apparatus as claimed in claim 10, wherein:
the process in execution comprises a plurality of jobs; and
the updating of the process in execution is one of addition of a job to the process in execution, advance execution of one of the jobs of the process in execution, and suspension of one of the jobs of the process in execution.

12. The process management apparatus as claimed in claim 10 or 11, wherein in updating the process in execution in response to the request, the process execution control part determines based on authority data whether a requestor of the request has authority to update the process in execution.

13. The process management apparatus as claimed in claim 12, wherein:
the process in execution comprises a plurality of jobs; and
the authority is authority to perform one of addition of a job to the process in execution, advance execution of one of the jobs of the process in execution, and suspension of one of the jobs of the process in execution.

14. The process management apparatus as claimed in claim 12 or 13, further comprising:
an authority data storage part configured to store the authority data.

15. The process management apparatus as claimed in any one of claims 10 to 14 wherein the process execution control part extracts the process in execution from an in-execution process storage part storing processes in execution in response to a request.

16. The process management apparatus as claimed in claim 15, wherein:
process execution control part transmits the process in execution extracted from the in-execution process storage part to a process editing apparatus that edits the process in execution.

17. The process management apparatus as claimed in claim 16, further comprising:
a process template management part configured to manage a process template,
wherein the process template management part enters the edited process in execution as the process template in response to a request.

18. The process management apparatus as claimed in claim 15, 16 or 17 further comprising the in-execution process storage part.

19. The process management apparatus as claimed in any one of claims 10 to 18 wherein the process in execution comprises a plurality of jobs, the jobs each including state information representing progress thereof.

20. The process management apparatus as claimed in any one of claims 10 to 19 wherein a process definition that is a process template and the process in execution are different entities, and are separately operable.

21. A process editing method **characterised by** the step of:
(a) editing a process in execution.

22. A method according to claim 21, wherein
the process in execution comprises a plurality of jobs; and
the editing of the process in execution is one of addition of a job to the process in execution, advance execution of one of the jobs of the process in execution, and suspension of one of the jobs of the process in execution.

23. A method according to claim 21 or 22, further comprising the step of:
(b) obtaining the process in execution from a process management apparatus performing process management.

24. A method according to claim 21, 22 or 23, wherein the process in execution comprises a plurality of jobs forming the process, the jobs each including state information representing progress thereof.

25. A method according to any one of claims 21 to 24 further comprising the step of:
(b) transmitting a request to update the process in execution to a process management apparatus performing process management.

26. A method according to any one of claims 21 to 25 further comprising the step of:
(b) transmitting a request to enter the edited process in execution as a process template to a process management apparatus performing process management.

27. A method according to claim 26, further comprising the step of:
(b) displaying a screen relating to the entry of the edited process.

28. A method according to any one of claim 21 to 27 further comprising the step of:
(b) displaying a screen relating to the editing of the process in execution.

29. A method **characterised by** the step of:
(a) updating a process in execution in response to a request.

30. A method according to claim 29, wherein:
the process in execution comprises a plurality of jobs; and
the updating of the process in execution is one of addition of a job to the process in execution, advance execution of one of the jobs of the process in execution, and suspension of one of the jobs of the process in execution.

31. A method according to claim 29 or 30 further comprising the step of:
(b) determining based on authority data whether a requestor of the request has authority to update the process in execution in updating the process in execution in response to the request.

32. A method according to claim 31, wherein:
the process in execution comprises a plurality of jobs; and
the authority is authority to perform one of addition of a job to the process in execution, advance execution of one of the jobs of the process in execution, and suspension of one of the jobs of the process in execution.

33. A method according to any one of claims 29 to 32 further comprising the step of:
(b) extracting the process in execution from an in-execution process storage part storing processes in execution in response to a request.

34. A method according to claim 33, further comprising the step of:
(c) transmitting the process in execution extracted from the in-execution process storage part to a process editing apparatus that edits the process in execution.

35. A method according to claim 34, further comprising the step of:
(d) entering the edited process in execution as a process template in response to a request.

36. A method according to any one of the computer-readable recording medium claims 29 to 35 wherein the process in execution comprises a plurality of jobs, the jobs each including state information representing progress thereof.

37. A computer-readable recording medium storing a program for causing a computer to perform a process editing method, according to any one of claims 21 to 28.

38. A computer-readable recording medium storing a program for causing a computer to perform a process management method according to any one of claims 29 to 36.
